# EUROPEAN PATENT APPLICATION

(11) **EP 3 450 828 A1**
(43) Date of publication of application: **06.03.2019**
(21) Application number: 17382589.4
(22) Date of filing: 31.08.2017
(51) Int. Cl.: F21S 41/19, F21S 41/39, F21S 41/32, F21S 41/36, F21S 41/663, F21S 45/49, F21S 45/47, F21S 41/148, F21S 41/33, F21S 41/37, B60Q 1/00

(54) **LIGHTING DEVICE FOR AN AUTOMOTIVE VEHICLE HEADLAMP**

(71) Applicant: Valeo Iluminacion, 23600 Martos (ES)
(72) Inventor: TEBA, Daniel, 23600 MARTOS (ES); AVILES, Olivier, 23600 MARTOS (ES); GARCIA-CASTILLA, Jose, 23600 MARTOS (ES); RODRIGUEZ, Lidia, 23600 MARTOS (ES); LOPEZ, Pablo, 23600 MARTOS (ES); GARCIA, Javier, 23600 MARTOS (ES)

(57) **Abstract**

The invention relates to a lighting device (1) for an automotive vehicle (100), the lighting device comprising a first lighting module (2) arranged to produce a segmented light beam. This first lighting module (2) comprises a plurality of light source groups (3) being selectively activable, and a single-part reflector (4) comprising a plurality of reflecting optics (40). Each light source group (3) is associated to a reflecting optics (40) so as to produce a selectively activable light segment of the segmented light beam.

## Description

### TECHNICAL FIELD

This invention belongs to the field of lighting devices for automotive vehicles, and more particularly, to those providing segmented light beams.

### STATE OF THE ART

Lighting devices need to cover an increasing number of functionalities, to improve the visibility performance of automotive vehicles.

Segmented light beams offer a good solution for the customization of the projected beam, providing the possibility of choosing the number and position of segments that are projected in each situation. Design calculations are crucial so that all the light sources are coordinated and provide the suitable light segments, particularly when a wrong-positioned segment may make the projected beam not fulfilling particular regulations.

These type of segmented lighting devices contain many different elements in charge of emitting a single light segment, and must contain many segments to be able to adapt the projected light beam to the wide range of situations foreseen in the regulations. This situation request that many elements need to be adjusted and manufactured with a high degree of accuracy.

### DESCRIPTION OF THE INVENTION

The invention provides a solution for this problem by means of lighting device for an automotive vehicle according to claim 1. Preferred embodiments of the invention are defined in dependent claims.

In an inventive aspect, the invention provides a lighting device for an automotive vehicle, the lighting device comprising a first lighting module arranged to produce a segmented light beam, the first lighting module comprising
a plurality of light source groups being selectively activable and
a single-part reflector comprising a plurality of reflecting optics,
wherein each light source group is associated to a reflecting optics so as to produce a selectively activable light segment of the segmented light beam.

Since all the reflecting optics are gathered in a single-part reflector, the number of tolerances to take care of is drastically reduced, elements producing the light segments are immediately positioned with respect to each other when they are coupled to the single-part reflector.

In some particular embodiments, the single-part reflector is made by a thermoset material.

Thermoset materials are particularly suitable for this application, due to their manufacturing advantages.

In some particular embodiments, each light source group comprises at least a heatsink, preferably made of thermally conductive plastics.

Despite being joint to a single-part reflector, each light source group may dissipate heat to an individual heatsink, which may be calculated depending on the particular needs of each light source group.

In some particular embodiments, each heatsink is screwed on the single-part reflector. This type of attachment ensures the relative position between these two elements.

In some particular embodiments, each light source group comprises at least a support, such as a printed circuit board.

The support is useful for positioning the electronic elements needed for performing the lighting functions, and providing a base for their connections.

In some particular embodiments, the support is held between associated heatsink and associated reflecting optics.

This is the optimal position for a support: one side oriented to the reflecting optics and the other side being covered by the heatsink which dissipates the heat created by the electronic elements, such as the light sources, the temperature of which must be kept under control.

In some particular embodiments, the heatsink is attached to the support, and more particularly, glued to the support by means of a thermally conductive glue.

The thermally conductive glue lets the support dissipate heat to the heatsink, and provides a good attachment between these parts.

In some particular embodiments, a heatsink comprises a centring pin and the corresponding support comprises a centring hole, so that the centring pin matches in the centring hole, thus positioning the corresponding support relatively to the heatsink.

It is not enough that parts are attached together, but also that they are accurately positioned. The pin-hole system carries out this function by ensuring the relative position of two points, which are usually in the middle of the element. This is therefore achieved regardless the geometry of the rest of these parts, since the relative orientation is ensured by other means.

In some particular embodiments, each light source group comprises at least one light source, each light source being mounted in a support.

These light sources provide the lighting properties to the lighting device. The fact that they are included in a support makes it easier the positioning of these light sources and their light beams.

In some particular embodiments, the single-part reflector comprises
first guiding slots, suitable for guiding the support and positioning this support with respect to the single-part reflector in a first direction;
a pair of abutments, suitable for guiding the support and positioning this support with respect to the single-part reflector in a second direction perpendicular to the first direction and in a third direction perpendicular to the first direction and to the second direction.

This is a way of ensuring the positioning of the support, and thereby the positioning of light sources, with respect to the reflecting optics. Since the reflector comprises guiding means, only the manufacturing tolerances of these guiding means are relevant for the accurate positioning of these elements.

In some particular embodiments, the segmented light beam comprises light segments, and at least some of the light segments comprise at least a side vertical cut-off, and more particularly comprise two side vertical cut-off and a bottom horizontal cut-off. In some particular embodiments, the light segments of the segmented light beam are juxtaposed or overlapped two by two.

The cut-offs advantageously limit the geometry of the projected segmented light beam and their arrangement in overlapping two by two makes the fitting with the side vertical cut-offs particularly suitable.

In some particular embodiments, the single-part reflector further comprises a holding arm, suitable for holding a second lighting module, the single-part reflector and the holding arm being a single part.

This holding arm is suitable for supporting an additional lighting module and, as it is an integral part with the rest of the single-part reflector, the positioning of this additional lighting module is immediately achieved, as happens with the rest of the lighting sources.

In some particular embodiments, the lighting device further comprises a second lighting module suitable to produce a low beam, the second lighting module being arranged in the holding arm and in such a way that the segmented light beam is vertically complementary to the low beam produced by the second lighting module.

This lighting module may advantageously provide some lighting functionalities which are not covered by the rest of the lighting sources comprised in the lighting device.

In some particular embodiments, the lighting device further comprises
detection means for detecting a target;
driving means for activating, deactivating or dimming each of the light source groups, the driving means receiving information from the detection means.

These detection and driving means make the lighting device adaptable to different driving conditions.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1 a and 1 b show a front and an exploded view of some elements of a lighting device according to the invention.
Figure 2 shows an exploded view of the elements of a lighting device of Figure 1.
Figure 3 shows details about the assembly of elements of the lighting device of Figure 1.
Figures 4a and 4b show details about light segments of a lighting device according to the invention.
Figure 5 shows a different embodiment of a lighting device according to the invention.
Figure 6 shows a lighting device according to the invention being installed in an automotive vehicle.

### DETAILED DESCRIPTION OF THE INVENTION

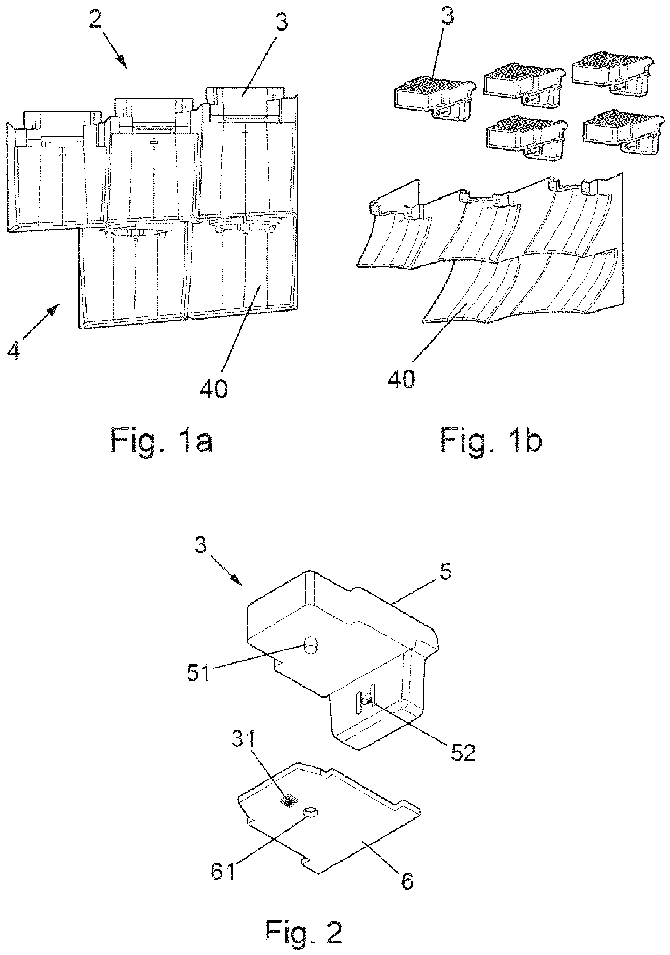

Figures 1 a and 1b show a front view and an exploded view of some elements of a lighting device according to the invention. This lighting device is suitable for being installed in an automotive vehicle (which is not shown).

In this figure, a first lighting module 2 arranged to produce a segmented light beam is seen. This first lighting module 2 comprises
a plurality of light source groups 3 being selectively activable; and
a single-part reflector 4 comprising a plurality of reflecting optics 40,
wherein each light source group 3 is associated to a reflecting optics 40 so as to produce a selectively activable light segment of the segmented light beam.

The single-part reflector 4 of this embodiment is manufactured in a single piece, preferably in a thermoset material. However, other manufacturing methods, such as moulding, forming or casting separate elements and attaching them are obviously within the scope of the invention.

Figure 2 shows an exploded view of the light source group 3 of Figure 1, which is intended to be attached to the single-part reflector.

This light source group 3 comprises a heatsink 5, preferably made of thermally conductive plastics. This heatsink 5 has a first hole 52, intended to receive a screw so that the heatsink is screwed on the single-part reflector (not seen in this figure).

The other element being part of this light source group 3 is a support 6, which in this case is presented in the shape of a printed circuit board. In other embodiments, this support may be a simple plastics substrate having some conductive tracks directly deposited on it. Any element suitable for this function may be used in different embodiments. In the embodiment shown in this figure, semiconductor light sources 31 are arranged on the support 6.

This support 6 is intended to be fixed to the heatsink 5, forming the light source group 3, and then the whole light source group 3 can be attached to the single-part reflector. To achieve the most accurate attachment possible, the heatsink 5 comprises a centring pin 51, and the corresponding support 6 comprises a centring hole 61. The centring pin 51 of the heatsink 5 matches in the centring hole 61, thus positioning the corresponding support 6 relatively to the heatsink 5.

In addition to these positioning elements, the heatsink 5 is attached to the support 6 and more particularly, glued to this support 6 by means of a thermally conductive glue, and then, the whole light source group 3 is attached to the single-part reflector.

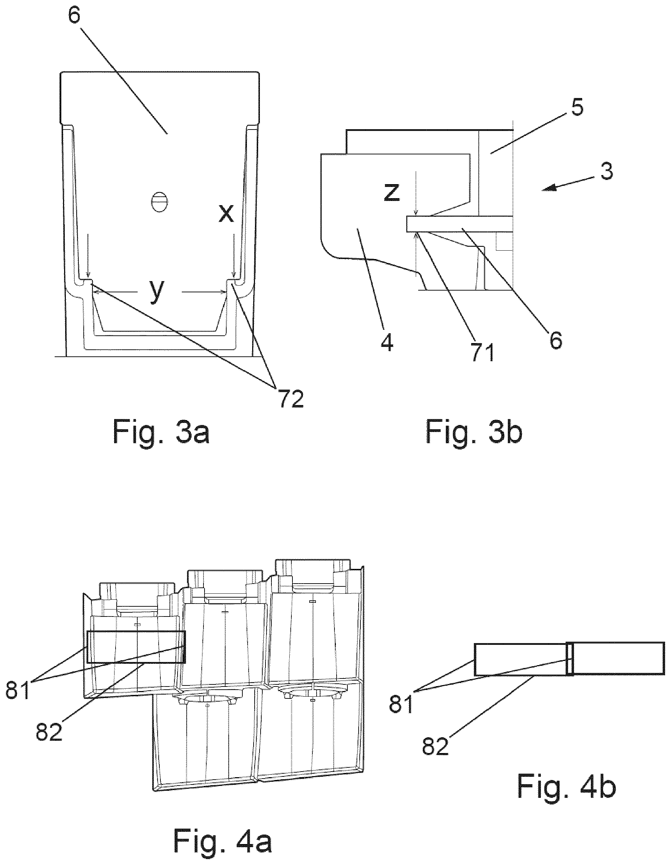

Figures 3a and 3b show two cross sections with details about the assembly of the light source group 3 to the single-part reflector 4, and more particularly, to the means for providing an accurate assembly.

The single-part reflector 4 comprises
first guiding slots 71, suitable for guiding the support 6 and positioning this support 6 with respect to the single-part reflector 4 in a first direction z;
a pair of abutments 72, suitable for guiding the support 6 and positioning this support 6 with respect to the single-part reflector 4 in a second direction x perpendicular to the first direction z and in a third direction y perpendicular to the first direction z and to the second direction x.

The light source group 3 is inserted in the single-part reflector, and more specifically, in the first guiding slots 71. The fact of inserting the light source group 3 in these first guiding slots 71 ensures an accurate relative positioning of the light source group 3 with respect to the single-part reflector 4 in the first direction z.

When the light source group 3 is inserted, it is slid along these first guiding slots 71 until being stopped by a pair of abutments 72. These abutments 72 provide a stop position for the light source group 3, thereby positioning the light source group 3 in a second direction x with respect to the single-part reflector 4. In addition to this, the abutments 72 also provides a path between them, so that, when the light source group 3 is inserted in this path, it is positioned in a third direction y, perpendicular to the first and second directions, so that the light source group 3 is accurately attached to the single-part reflector 4 in the three dimensions.

Referring back to Figure 1, once the light source group 3 has been assembled, it is incorporated to the first lighting module 2 and arranged in contact with the single-part reflector 4, in such a way that the support 6 is held between associated heatsink 5 and associated reflecting optics 40.

Although the light source group 3 is shown in contact with the single part reflector, which makes the relative positioning of both elements easier, any way assembling manner is suitable for the purpose of this invention, as soon as each light source group 3 is associated to a reflecting optics 40.

Figure 4a shows different light segments comprised in the segmented light beam produced by the first lighting module 2.

These light segments comprise two side vertical cut-offs 81 and a bottom horizontal cut-off 82. These cut-offs are intended to provide a predetermined shape to the light segments, so that there is a certainty about the light intensity provided in a limited zone. Cut-offs limit the zone where light is projected outside the lighting device.

Figure 4b shows two adjacent light segments, so it is seen how they are juxtaposed or overlapped two by two. This aims to achieve a continuity in the projected light pattern, so that it is ensured that no light gap is present in the light pattern, whatever the light requirement is.

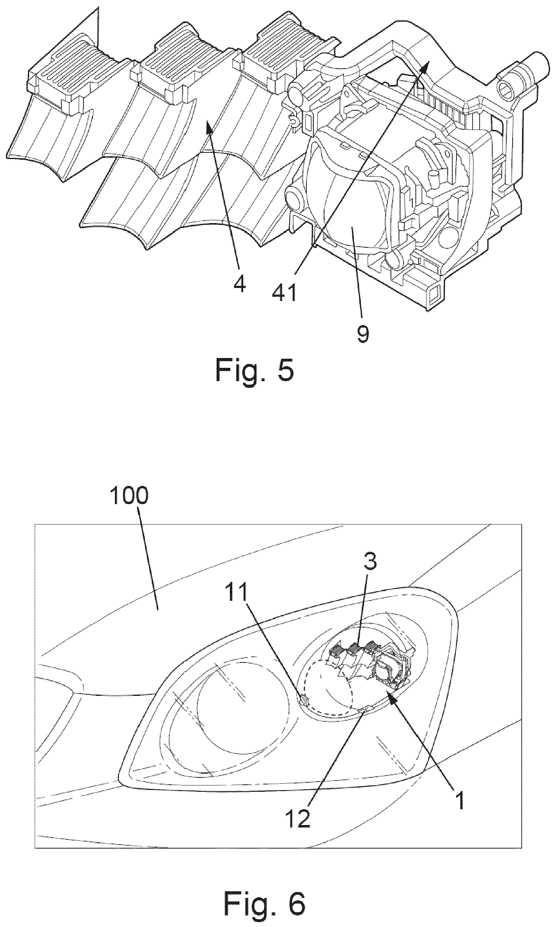

Figure 5 shows a different embodiment of a lighting device 1 according to the invention.

In this embodiment, the single-part reflector 4 further comprises a holding arm 41, suitable for holding a second lighting module 9, the single-part reflector 4 and the holding arm 41 being a single part.

The second lighting module 9 is suitable to produce a low beam pattern, and is arranged in the holding arm 41 in such a way that the segmented light beam is vertically complementary to the low beam produced by the second lighting module 9.

Figure 6 shows a lighting device 1 according to the invention being installed in an automotive vehicle 100.

The lighting device 1 shown in this embodiment further comprises
detection means 11 for detecting a target; and
driving means 12 for activating, deactivating or dimming each of the light source groups 3, the driving means 12 receiving information from the detection means 11.

These detection means 11 and driving means 12 are useful when selective lighting functionalities are to be performed by the lighting device 1. The detection means 11 are intended, by means of an emitter-receiver or any other suitable technology, to detect the presence of a target which is within the foreseen trajectory of the automotive vehicle 100.

When such a target is detected, the detection means 11 send information to the driving means 12, so that the driving means 12 may act on the intensity of selected light source groups 3, and some of the light segments may be deactivated or dimmed.

This is useful, for example, in an anti-glare functionality, where other vehicles or pedestrians are detected, and the light pattern which is emitted by the lighting device is modified so as to avoid glaring them.

## Claims

1. Lighting device (1) for an automotive vehicle (100), the lighting device comprising a first lighting module (2) arranged to produce a segmented light beam, the first lighting module (2) comprising
a plurality of light source groups (3) being selectively activable; and
a single-part reflector (4) comprising a plurality of reflecting optics (40),
wherein each light source group (3) is associated to a reflecting optics (40) so as to produce a selectively activable light segment of the segmented light beam.

2. Lighting device (1) according to claim 1, wherein the single-part reflector (4) is made by a thermoset material.

3. Lighting device (1) according to any of the preceding claims, wherein each light source group (3) comprises at least a heatsink (5), preferably made of thermally conductive plastics.

4. Lighting device (1) according to claim 3, wherein each heatsink (5) is screwed on the single-part reflector (4).

5. Lighting device (1) according to any of the preceding claims, wherein each light source group (3) comprises at least a support (6), such as a printed circuit board.

6. Lighting device (1) according to claim 5 when depending on any of claims 3 or 4, wherein the support (6) is held between associated heatsink (5) and associated reflecting optics (40).

7. Lighting device (1) according to claim 5 when depending on any of claims 3 or 4, wherein the heatsink (5) is attached to the support (6), and more particularly, glued to the support by means of a thermally conductive glue.

8. Lighting device (1) according to any of claims 6 or 7, wherein a heatsink (5) comprises a centring pin (51) and the corresponding support (6) comprises a centring hole (61), so that the centring pin (51) matches in the centring hole (61), thus positioning the corresponding support (6) relatively to the heatsink (5).

9. Lighting device (1) according to any of claims 5 to 8, wherein each light source group (3) comprises at least one light source (31), each light source being mounted in a support (6).

10. Lighting device according to any of claims 5 to 9, wherein the single-part reflector (4) comprises
first guiding slots (71), suitable for guiding the support (6) and positioning this support (6) with respect to the single-part reflector (4) in a first direction (z);
a pair of abutments (72), suitable for guiding the support (6) and positioning this support (6) with respect to the single-part reflector (4) in a second direction (x) perpendicular to the first direction (z) and in a third direction (y) perpendicular to the first direction (z) and to the second direction (x).

11. Lighting device (1) according to any of the preceding claims, wherein the segmented light beam comprises light segments (8), and at least some of the light segments comprise at least a side vertical cut-off (81), and more particularly comprise two side vertical cut-off (81) and a bottom horizontal cut-off (82).

12. Lighting device (1) according to claim 11, wherein the light segments (8) of the segmented light beam are juxtaposed or overlapped two by two.

13. Lighting device (1) according to any of the preceding claims, wherein the single-part reflector (4) further comprises a holding arm (41), suitable for holding a second lighting module (9), the single-part reflector (4) and the holding arm (41) being a single part.

14. Lighting device (1) according to claim 13, further comprising a second lighting module (9) suitable to produce a low beam, the second lighting module (9) being arranged in the holding arm (41) and in such a way that the segmented light beam is vertically complementary to the low beam produced by the second lighting module (9).

15. Lighting device (1) according to any of the preceding claims, further comprising
detection means (11) for detecting a target; and
driving means (12) for activating, deactivating or dimming each of the light source groups (3), the driving means (12) receiving information from the detection means (11).
